# EUROPEAN PATENT SPECIFICATION

(11) **EP 2 425 753 B1**
(45) Date of publication and mention of the grant of the patent: **24.07.2013**
(21) Application number: 11190308.4
(22) Date of filing: 23.05.2008
(51) Int. Cl.: A47J 31/36

(54) **A positioning and extraction assembly for single-use capsules in coffee-making machines**
Positionierungs- und Extraktionsanordnung für Einwegkapseln in Kaffeemaschinen
Assemblage de positionnement et d'extraction pour capsules à usage unique dans des machines à café

(30) Priority: 23.05.2007 IT FI20070120
(43) Date of publication of application: 07.03.2012
(62) Divisional of application: 08763093.5
(73) Proprietor: Luigi Lavazza S.p.A., 10154 Torino (IT)
(72) Inventor: Levantino, Enrico, I-55049 VIAREGGIO (Lucca) (IT)
(74) Representative: Quinterno, Giuseppe

(56) References cited:
- EP-A- 1 721 553
- EP-A- 1 757 212
- WO-A-2005/058111
- WO-A-2008/046740

## Description

The present invention relates to the field of coffee machines of the type using single-use refill capsules, and relates in particular to a unit for positioning and extracting single-use capsules in coffee machines, of the kind defined in the preamble of claim 1.

WO 2005/058111A discloses a unit of that kind comprising capsule locating means in a dispensing zone of a coffee machine. Said capsule locating means include opposite members, radially translatable in respective guiding cavities and urged towards said dispensing zone by respective helical springs.

A similar unit is disclosed in EP 1 721 553 A.

The main aim of the present invention is therefore that of perfecting a unit for positioning and extracting single-use capsules for coffee machines which avoids the deformation of the capsules.

Another important aim of the present invention is that of providing a unit for positioning and extracting single-use capsules for coffee machines which Operates in a reliable manner and does not generate after-sales returns, the need for assistance, and complaints from customers.

These aims are achieved by means of the unit for positioning and extracting single-use capsules for coffee machines according to the invention, as defined in claim 1.

Other characteristics and advantages of the unit for positioning and extracting single-use capsules for coffee machines according to the invention will become clearer from the following description of an embodiment thereof, provided by way of non-limiting example with reference to the appended drawings, in which:
- Figure 1 is a later view, in section along a longitudinal centre line plane, of a unit according to the invention, with a capsule shown by means of dashed lines at three different moments, respectively a) before insertion into the unit, b) inserted into the unit before the perforation step, c) discharged from the unit;
- Figure 2 is a front view of the unit in section along the line II-II of Figure 1;
- Figures 3 to 8 each show a view from above of the unit according to the invention, in section along a horizontal plane, shown in different steps of processing of the capsule;
- Figures 9,10 and 11 respectively show figures 3, 5 and 8 on an enlarged scale;
- Figure 12 is a side view of the unit with the actuating lever shown in two different positions.

With reference to the aforesaid figures, a capsule usable in a positioning and extracting unit according to the invention is indicated by C and is constituted by a flared, cup-shaped body C1, which has on the upper, edge a flange C2 onto which a sealing film C3 is welded.

The unit for positioning and extracting single-use capsules comprises an outer casing 11 in which is defined a vertical pipe 12, open at the top for the insertion of a capsule C. The pipe 12 is configured so as to allow the capsule to slide, by gravity, oriented with its axis C5 substantially orthogonal to the length of the pipe itself. In particular, the cross-section of the pipe is partially of complementary shape to the cross-section of the capsule C to allow guided sliding thereof.

In an intermediate position of the pipe 12 a dwell zone 13 is defined in which the capsule is processed, as described in more detail hereinafter; the dwell zone is in practice a chamber which intersects the pipe 12 and which extends in a direction transverse to the latter, dividing it substantially into three parts: an upper part in which the opening 12a for the insertion of the capsule C is defined, a central part corresponding to the dwell zone 13, and a lower part in which the discharge outlet 12b for the capsule C is defined.

At the dwell zone 13, on opposite sides of the pipe 12, there are support shoulders 14 for supporting external parts of the edge of the flange C2 of the capsule, opposed with respect to the axis C5; the shoulders 14 allow the blocking of the capsule as it drops from the upper opening 12a of the pipe 12. When the capsule is resting on the shoulders 14, the direction in which the dwell zone 13 extends coincides with the axis C5 of the capsule itself.

The pipe 12, in front of the shoulders 14 in the opposite direction to that in which the capsule extends when disposed on the shoulders, has a portion 12c having a width greater than the distance between those shoulders. The portion 12c extends as far as the discharge outlet 12b and allows the capsule to drop towards the outlet 12b, as described in more detail hereinafter.

At one end of the dwell zone 13 there is a small plate 15, substantially fixed to the casing 11, and which has in the centre a nozzle 16 for the injection of water coming from the pumping means of the coffee machine with which the unit is associated, which means is not shown in the drawings. At the inlet of the nozzle 16 there is an over-pressure valve 17 of the spring type, which opens when the pressure of the water coming from the pumping means exceeds the resistance value of the spring. On the surface of the plate 15 which faces the zone 13 there are perforating means for perforating the film C3 of the capsule, such as a plurality of perforating needles 18 (in other embodiments, the tearing of the film may be effected solely by means of the jet of water, thus avoiding the presence of perforating needles). An annular gasket 19 is disposed inside a corresponding annular recess 20 provided on the surface of the plate 15 on the perimeter of the area occupied by the needles 18, and its aim is to prevent water leaking laterally during the soaking of the capsule, as will become clearer hereinafter. According to what has been stated previously, the portion 12c of the pipe 12 in which the capsule C drops, and which has a width greater than the distance between the shoulders 14, is defined between the plate 15 and the shoulders themselves.

In the dwell zone 13 a cup-shaped body 21 facing towards the plate 15 is arranged to slide and has a shape substantially complimentary to the capsule C. An important aspect of the invention is that the cup-shaped body 21 is coaxial with the direction in which the dwell zone extends, or with the axis C5 of the capsule when resting on the shoulders 14.

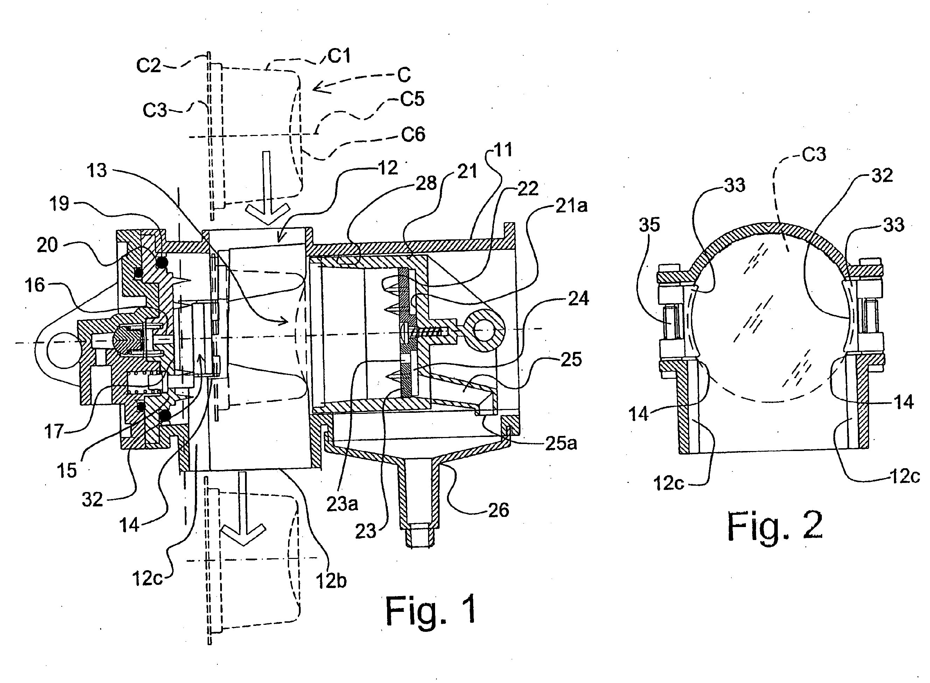

On the bottom 21a of the cup-shaped body 21 there are further perforating means for the base C6 of the capsule, such as a plurality of further perforating needles 22 emerging from a small disc 23 secured to the bottom 21a by means of a screw; the disc 23 is configured so as to define with the bottom 21a an air gap 24, and has a through-hole 23a (shown by way of example in Figure 1) which places the air gap 24 in communication with the space in the cup-shaped body which receives the capsule C.

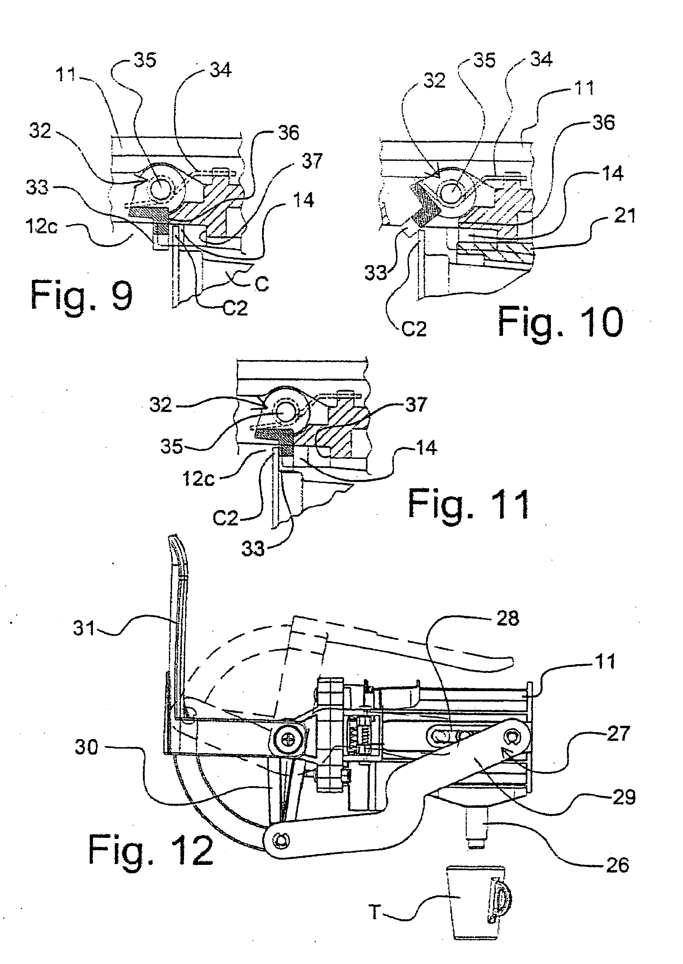

As can be seen in Figure 1, on the bottom 21a there are means for conveying the coffee towards the dispensing zone of the machine with which the unit is associated, such as a pipe 25 integral with the bottom itself, and the discharge outlet 25a of which is superposed on a funnel portion 26 integral with the casing 11 and which ends above the zone on which the coffee-cup is to be arranged (indicated by T in Figure 12).

Associated with the cup-shaped body 21 is a means 27 which allows translation thereof orthogonal to the pipe 12, from a position outside the pipe to a position behind the plate 15. Such translation permits the coupling of the cup-shaped body 21 to the capsule C and the displacement of the latter into abutment on the plate 15.

As can be seen in Figure 12, the translation means 27 is constituted in this embodiment by a kinetic motion means comprising a guide 28 for the cup-shaped body 21, defined on the casing 11, parallel to the direction in which the dwell zone extends, a connecting rod 29 pivoted by one end on the sides of the cup-shaped body 21 and by the opposite end on a rocker-arm 30 which is itself pivoted on the casing 11. A lever 31 for actuating the kinematic motion means is integral with the rocker-arm 30.

Along the pipe 12, at the portion 12c in which the capsule drops towards the discharge outlet 12b, there are locating means 32 for the capsule which prevent the return movement of the latter from the plate 15 onto the support shoulders 14.

According to the invention, the locating means 32 yield when urged towards the plate 15 and are substantially rigid when urged by the flange C2 towards the cup-shaped body 21, such as to allow the passage of the capsule towards the plate 15 and to prevent the passage of the capsule during the return movement of the cup-shaped body 21 towards the position outside the pipe 12 by interference with the flange C2, thus permitting the extraction of the capsule C' from the cup-shaped body 21 and the consequent drop towards the discharge outlet, inasmuch as it is not supported.

The locating means 32, clearly visible in Figures 9, 10 and 11, comprise, for example, two gates 33 which are secured to the respective opposed sides of the pipe 12, and which have substantially two positions: a first position in which they extend towards the centre of the dwell zone, where they interfere with the movement of the capsule, and a second position behind the corresponding side of the pipe; said second position does not interfere with the movement of the capsule. Associated with the gates 33 are resilient means 34 which permit their return from the second position to the first position. Preferably, each gate 33 is hinged to the casing 11 via a pin 35 substantially parallel to the length of the pipe 12, or orthogonal to the direction in which the dwell zone 13 extends and to the axis C5 of the capsule. The resilient means 34 are constituted by torsion springs wound on corresponding pins 35, and first ends of which are fixed to the casing 11 while the second ends thrust against the corresponding gates 33. When the gates 33 are in the aforesaid first position, they bear on corresponding rotational end stops 36.

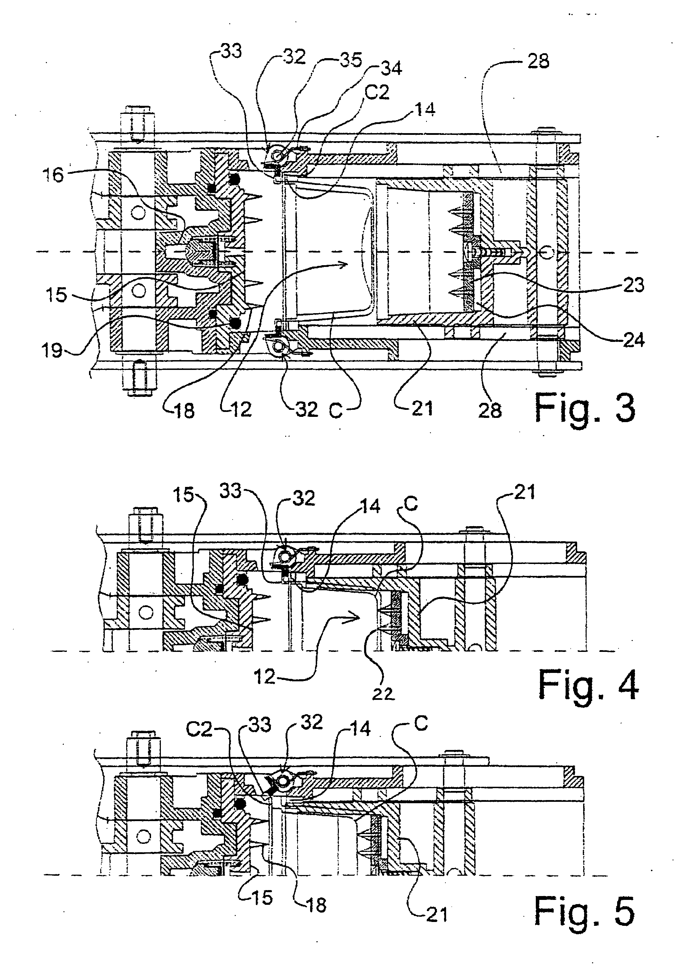

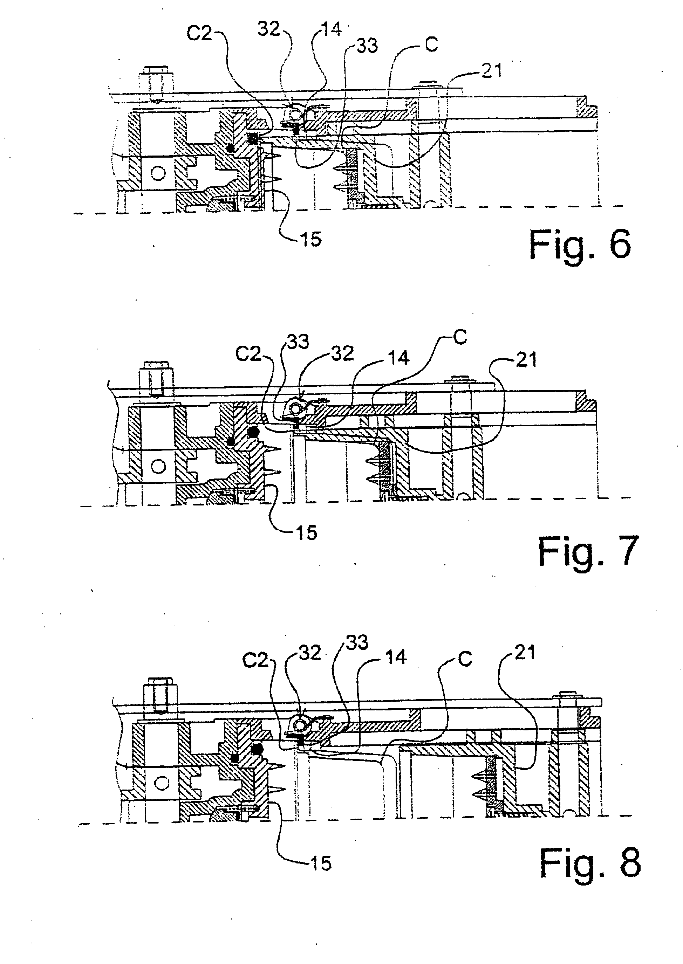

The operation of the invention is as follows: the capsule C is inserted into the upper opening 12a of the pipe 12. The capsule is guided by the complementary shape of the pipe until it comes to rest with the edge of the flange C2 on the shoulders 14 (see Figures 1, 3 and 9). The space occupied by the flange C2 of the capsule at each shoulder 14 is delimited below by the shoulder itself and on two sides by the corresponding gate 33 and by a vertical guide shoulder 37. At this point, by acting on the lever 31, the cup-shaped body 21 is translated in such a way that the capsule C is inserted into the cup-shaped body (they are coaxial), in particular the perforating needles 22 are located against the base of the capsule (see Fig. 4). Further rotation of the lever 31 causes the cup-shaped body 21 to press on the capsule and consequently to push the flange C2 of the capsule against the gates 33; these rotate, allowing the capsule and the cup-shaped body to pass through (see Figures 5 and 10). At this point, a further rotatory movement of the lever 31 brings the capsule into abutment on the plate 15 and on the gasket 19, allowing the needles to tear the film (see Figure 6) and the opposed base C6. Owing to the fact that the edge 33a of the gates which faces towards the centre of the dwell zone 13 has a shape substantially complementary to the external circular shape of the cup-shaped body 21 and that the distance between the two gates 33 is greater than (or at least equal to) the outside diameter of the cup-shaped body 21, the gates 33 do not interfere with the latter. For this reason, once the flange has passed through the gates 33, the latter return from the second position into the first position by virtue of the thrust imposed by the torsion springs 34.

Via the nozzle 16, hot water is then injected which soaks the capsule torn by the needles, passing through it, and thus mixing with the coffee powder; the flow of beverage obtained is conveyed as far as the zone in which it is poured into the coffee-cup T.

When this operation is completed, a contrary rotatory movement of the lever 31 makes it possible to reverse the motion of the cup-shaped body 21 with the capsule. When the flange C2 of the capsule meets the gates 33, the latter, which cannot rotate since they are prevented by the end stop 36, block the capsule while the cup-shaped body 21 continues to be translated (see Figures 8 and 11). The result is the extraction of the capsule from the cup-shaped body. Once the cup-shaped body 21 has returned to the initial position outside the pipe 12, the capsule is no longer supported by anything and therefore drops along the drop portion 12c of the pipe, as far as the discharge outlet 12b.

It is clear that other kinds of locating means that yield in only one direction are possible. For example, other locating means (not shown in the drawings) may be constituted by two small cylinders, emerging from respective guide seats provided in respective sides of the pipe 12, interfering with the movement space of the capsule; between the bottom of the seats and the cylinders, springs are arranged which oppose the re-entry movement of the cylinders into the seats; the protruding ends of the cylinders are chamfered on the side encountered by the capsule in the movement in which it approaches the plate; in this way the capsule, encountering the chamfered sides, imparts a re-entry thrust to the cylinders, while in its motion in the opposite direction, the capsule encounters the unchamfered sides of the cylinders, being blocked.

Furthermore, another embodiment may provide, as locating means, resiliently flexible thin plates (of suitable rigidity) protruding in a cantilevered manner from respective sides of the pipe in an inclined manner, with the free ends facing substantially towards the plate, thus permitting the passage of the capsule towards the latter but not the opposite movement.

In practice, it has been found that the invention achieves the aims proposed. In fact, by making the cup-shaped body coaxial with the capsule when resting on the shoulders, the deformation of the capsule is avoided. This results in a reduction in the occurrence of blocking of the capsule in the unit and of the occurrence of undesired breakage of the capsule. In order to allow the coaxial arrangement, it was necessary to use locating means for the capsule in the step of extraction from the cup-shaped body which would yield in the direction in which the capsule approaches the plate for perforation and injection, and which would be rigid in the opposite direction in order to allow the extraction of the capsule from the cup-shaped body.

The unit thus designed is capable of numerous modifications and variants, all coming within the scope of the same inventive concept; moreover, all the details may be substituted by other technically equivalent elements, without thereby departing from the scope of protection of the invention itself.

In practice, the materials used, provided they are compatible with the specific use, and also the dimensions, may be any whatever, according to the requirements and the state of the art.

Wherever the characteristics and techniques mentioned in any claim are followed by reference signs, these have been appended, by way of example, solely in order to increase the intelligibility of the claims and consequently have no limiting effect on the interpretation of each element which they identify.

## Claims

1. A unit for positioning and extracting single-use capsules in a coffee machine, comprising
- a pipe (12), open at the top, for the insertion of a capsule (C), said pipe (12) being configured so as to allow said capsule (C) to slide, by gravity, oriented with its axis (C5) substantially transverse to the length of the pipe (12);
- a dwell zone (13) for the capsule (C), defined in an intermediate position of said pipe (12) and extending in a direction transverse to said pipe (12), at said zone (13), on opposite sides of said pipe (12), support shoulders (14) being provided for supporting the capsule (C);
- a plate (15) disposed at an end of said dwell zone (13) and equipped with at least one nozzle (16) for the injection of water coming from pumping means of the coffee machine;
- a cup-shaped body (21) arranged so as to slide in said dwell zone (13) and facing towards said plate (15), translation means (27) being provided for translating said cup-shaped body (21) transversely to said pipe (12) from a position outside the pipe (12) to a position behind said plate (15), and suitable for permitting during translation the coupling of the cup-shaped body (21) to the capsule (C) and the displacement of the latter into abutment on said plate (15), conveying means (25) being provided on the bottom (21a) of said cup-shaped body (21) for conveying the coffee towards the dispensing zone of the machine;
- locating means (32) for the capsule (C) which are disposed along said pipe (12) at a portion (12c) of said pipe (12) having a width greater than the distance between the support shoulders (14) themselves, defined between said support shoulders (14) and said plate (15), and which are suitable for allowing the capsule (C) to drop downwards and for preventing the return movement of the capsule (C) towards said support shoulders (14), and
wherein said cup-shaped body (21) is coaxial with the axis (C5) of said capsule (C) when the capsule (C) is resting on said support shoulders (14), and
said locating means (32) for the capsule yield when urged towards said plate (15) and are substantially rigid when urged in the opposite direction;
said locating means (32) comprising two gates (33), disposed on respective opposed sides of said pipe (12) at said drop portion (12c) for the capsule (C), said gates (33) being able to occupy substantially a first position in which they extend towards the centre of said dwell zone (13), interfering with the space to be occupied by the capsule (C), and a second position behind the corresponding side of the pipe (12), not interfering with the movement of the capsule (C), resilient means (34) being provided which oppose the movement of said gates (33) from said first position to said second position;
the unit being **characterized in that** each said gate (33) is hinged to the casing (11) by means of a pin (35), said resilient means (34) being constituted by torsion springs wound each on a corresponding one of said pins (35), and having first ends fixed to the casing (11) and second ends thrusting against a corresponding one of the gates (33), or vice versa, when the gates (33) are in the aforesaid first position, bearing on corresponding rotational end stops (36).

2. A unit according to claim 1, **characterized in that** an edge (33a) of said gates (33), which faces towards the centre of the dwell zone (13) has a shape substantially complementary to the circular external shape of the cup-shaped body (21).

3. A unit according to claim 2, **characterized in that** the distance between said gates (33) is greater than the outside diameter of said cup-shaped body (21).

4. A unit according to one or more of claims 1 to 3, the space that can be occupied by a flange (C2) of the capsule (C) resting on said support shoulders (14) is delimited below by said support shoulders (14) and on two sides by the corresponding gate (33) and by a vertical guide shoulder (37).

## Patentansprüche

1. Positionierungs- und Extrahierungseinheit für Kapseln zum einmaligen Verwenden in einer Kaffeemaschine, umfassend:
- ein oben offenes Rohr (12) zum Eingeben einer Kapsel (C), wobei das Rohr (12) dazu eingerichtet ist, es der Kapsel (C) zu erlauben, durch die Schwerkraft zu gleiten, wobei ihre Achse (C5) im Wesentlichen transversal zu der Länge des Rohrs (12) liegt;
- eine Verweilzone (13) für die Kapsel (C), welche in einer Zwischenposition des Rohrs (12) definiert ist und sich in eine Richtung transversal zu dem Rohr (12) erstreckt, wobei an der Zone (13) an gegenüberliegenden Seiten des Rohrs (12) Trageschultern (14) zum Tragen der Kapsel (C) bereitgestellt sind;
- eine Platte (15), welche an einem Ende der Verweilzone (13) angeordnet und mit wenigstens einer Düse (16) zum Einspritzen von Wasser aus Pumpmitteln der Kaffeemaschine ausgestattet ist;
- einen Becher-förmigen Körper (21), welcher dazu eingerichtet ist, in der Verweilzone (13) zu gleiten und in Richtung der Platte (15) weist, Verschiebungsmittel (27), welche vorgesehen sind, um den Becher-förmigen Körper (21) transversal zu dem Rohr (12) von einer Position außerhalb des Rohrs (12) in eine Position hinter der Platte (15) zu verschieben, und welche geeignet sind, während einer Verschiebung das Koppeln des Becher-förmigen Körpers (21) an die Kapsel (C) und das Versetzen der letzteren in Anschlag mit der Platte (15) zu erlauben, Beförderungsmittel (25), welche an dem Boden (21a) des Becher-förmigen Körpers (21) bereitgestellt sind zum Befördern des Kaffees in Richtung der Ausgabezone der Maschine;
- Lokalisierungsmittel (32) für die Kapsel (C), welche entlang des Rohrs (12) an einem Abschnitt (12c) des Rohrs (12) angeordnet sind, welcher eine Breite aufweist, die größer ist als der Abstand zwischen den Trageschultern (14) selbst, definiert zwischen den Trageschultern (14) und der Platte (15), und welche dazu geeignet sind, es der Kapsel (C) zu erlauben, nach unten zu fallen, und eine Rückbewegung der Kapsel (C) in Richtung der Trageschultern (14) zu verhindern, und wobei der Becher-förmige Körper (21) koaxial mit der Achse (C5) der Kapsel (C) ist, wenn die Kapsel (C) an den Trageschultern (14) ruht, und
die Lokalisierungsmittel (32) für die Kapsel nachgeben, wenn sie in Richtung der Platte (15) gedrängt werden, und sie im Wesentlichen starr sind, wenn sie in die entgegengesetzte Richtung gedrängt werden; wobei die Lokalisierungsmittel (32) zwei Tore (33) umfassen, welche an jeweils gegenüberliegenden Seiten des Rohrs (12) an dem Fallabschnitt (12c) für die Kapsel (C) angeordnet sind, wobei die Tore (33) in der Lage sind, im Wesentlichen eine erste Position, in welcher sie sich in Richtung der Mitte der Verweilzone (13) erstrecken, wobei sie mit dem Raum, der von der Kapsel (C) eingenommen werden soll, wechselwirken, und eine zweite Position, hinter der entsprechenden Seite des Rohrs (12), in welcher sie nicht mit der Bewegung der Kapsel (C) wechselwirken, einnehmen können, wobei elastische Mittel (34) bereitgestellt sind, welche der Bewegung der Tore (33) von der ersten Position in die zweite Position entgegenwirken;
wobei die Einheit **dadurch gekennzeichnet ist, dass** jedes der Tore (33) an das Gehäuse (11) mittels eines Stifts (35) angelenkt ist, wobei die elastischen Mittel (34) von Torsionsfedern gebildet werden, von welchen jede auf einem entsprechenden der Stifte (35) gewickelt ist und erste Enden aufweist, welche an dem Gehäuse (11) befestigt sind, und zweite Enden aufweist, welche gegen ein entsprechendes der Tore (33) stoßen, oder andersherum, wenn die Tore (33) lagernd auf entsprechenden Dreh-Endanschlägen (36) in der oben genannten ersten Position sind.

2. Einheit nach Anspruch 1, **dadurch gekennzeichnet, dass** ein Rand (33a) der Tore (33), welcher in Richtung der Mitte der Verweilzone (13) weist, eine Form aufweist, welche im Wesentlichen komplementär zu der kreisförmigen Außenform des Becher-förmigen Körpers (21) ist.

3. Einheit nach Anspruch 2, **dadurch gekennzeichnet, dass** der Abstand zwischen den Toren (33) größer ist als der Außendurchmesser des Becher-förmigen Körpers (21).

4. Einheit nach einem oder mehreren der Ansprüche 1 bis 3, wobei der Raum, welcher von einem Flansch (C2) der Kapsel (C) eingenommen werden kann, welche an den Trageschultern (14) ruht, nach unten von den Trageschultern (14) und an zwei Seiten von dem entsprechenden Tor (33) und einer vertikalen Führungsschulter (37) begrenzt ist.

## Revendications

1. Unité de positionnement et d'extraction de capsules à usage unique dans une machine à café, comprenant :
un tube (12), ouvert en haut, pour l'insertion d'une capsule (C), ledit tube (12) étant configuré de façon à permettre à ladite capsule (C) de glisser, par gravité, orientée avec son axe (C5) sensiblement transversal à la longueur du tube (12) ;
une zone de placement (13) pour la capsule (C), définie dans une position intermédiaire dudit tube (12) et s'étendant dans une direction transversale au dit tube (12), au niveau de ladite zone (13), sur des côtés opposés dudit tube (12), des épaulements de support (14) étant prévus pour supporter la capsule (C) ;
une plaque (15) disposée à une extrémité de ladite zone de placement (13) et équipée d'au moins une buse (16) pour l'injection d'eau venant de moyens de pompage de la machine à café ;
un élément de forme creuse (21) agencé de façon à glisser dans ladite zone de placement (13) et à faire face à ladite plaque (15), des moyens de translation (27) étant prévus pour translater ledit élément de forme creuse (21) transversalement au dit tube (12) depuis une position à l'extérieur du tube (12) vers une position derrière ladite plaque (15), et convenant pour permettre pendant la translation le couplage de l'élément de forme creuse (21) avec la capsule (C) et le déplacement de cette dernière en butée sur ladite plaque (15), des moyens de convoiement (25) étant placés sur le fond (21a) dudit élément de forme creuse (21) pour convoyer le café vers la zone de distribution de la machine ;
des moyens de positionnement (32) pour la capsule (C) qui sont disposés le long dudit tube (12) en une partie (12c) dudit tube (12) ayant une largeur plus grande que la distance entre les épaulements de support (14) eux-mêmes, définis entre lesdits épaulements de support (14) et ladite plaque (15), et qui sont convenables pour permettre à la capsule (C) de tomber vers le bas et pour empêcher le mouvement de retour de la capsule (C) vers lesdits épaulements de support (14), et
dans lequel ledit élément de forme creuse (21) est coaxial avec l'axe (C5) de ladite capsule (C) quand la capsule (C) repose sur lesdits épaulements de support (14), et
lesdits moyens de positionnement (32) pour la capsule cèdent quand ils sont poussés vers ladite plaque (15) et sont sensiblement rigides quand ils sont poussés dans la direction opposée ;
lesdits moyens de positionnement (32) comprenant deux volets (33), disposés sur des côtés opposés respectifs dudit tube (12) au niveau de ladite partie de chute (12c) pour la capsule (C), lesdites volets (33) pouvant occuper sensiblement une première position dans laquelle ils s'étendent vers le centre de ladite zone de placement (13), interférant avec l'espace à occuper par la capsule (C), et une seconde position derrière le côté correspondant du tube (12), n'intervenant pas avec le mouvement de la capsule (C), des moyens élastiques (34) étant fournis qui s'opposent au mouvement desdits volets (33) depuis ladite première position vers ladite seconde position ;
l'unité étant **caractérisée en ce que** chaque volet (33) est articulé sur le logement (11) au moyen d'un axe (35), lesdits moyens élastiques (34) étant constitués par des ressorts de torsion enroulés chacun sur l'un correspondant desdits axes (35), et ayant des premières extrémités fixées sur le logement (11) et des secondes extrémités poussant contre l'un correspondant des volets (33), ou vice versa, quand les volets (33) sont dans la première position susmentionnée, reposant sur des arrêts d'extrémité en rotation correspondants (36).

2. Unité selon la revendication 1, **caractérisée en ce qu'**un bord (33a) desdits volets (33), qui fait face vers le centre de la zone de placement (13) a une forme sensiblement complémentaire à la forme extérieure circulaire de l'élément de forme creuse (21).

3. Unité selon la revendication 2, **caractérisée en ce que** la distance entre lesdits volets (33) est supérieure au diamètre extérieur dudit élément de forme creuse (21).

4. Unité selon une ou plusieurs des revendications 1 à 3, l'espace qui peut être occupé par un rebord (C2) de la capsule (C) reposant sur lesdits épaulements de support (14) est délimité au-dessous par lesdits épaulements de support (14) et sur deux côtés par le volet (33) correspondant et par un épaulement de guidage vertical (37).
